# EUROPEAN PATENT APPLICATION

(11) **EP 3 199 500 A1**
(43) Date of publication of application: **02.08.2017**
(21) Application number: 17153241.9
(22) Date of filing: 26.01.2017
(51) Int. Cl.: C04B 7/32

(54) **CALCIUM SULPHOALUMINATE CEMENT WITH MAYENITE PHASE**

(30) Priority: 29.01.2016 TR 201601267
(71) Applicant: CIMSA CIMENTO SANAYI VE TICARET ANONIM SIRKETI, Mersin (TR)
(72) Inventor: SUCU, MEL KE, MERS N (TR); DEL BA , TU HAN, MERS N (TR)
(74) Representative: Dereligil, Ersin

(57) **Abstract**

The invention is calcium sulphoaluminate cement having a dicalcium silicate (C₂S), calcium sulphoaluminate - yeelimite (C₄A₃S), tetracalcium iron aluminate (C₄AF), calcium sulphate (CS) and mayenite (C₁₂A7) mineral phase structure, and comprises gypsum or phosphogypsum; dross aluminium which is produced as waste during aluminium production; soda waste as pulp obtained in soda production facilities remaining after soda ash is removed as product; fly ash obtained from stack gases as a result of the combustion of pulverized coal in thermal power plants; waste bauxite obtained in calcium aluminate cement production facilities.

## Description

### Technical Field

The present invention relates to cements used in the construction sector. The present invention is particularly relates to calcium sulphoaluminate cement used as hydraulic binder in the construction materials sector (Construction Chemicals Sector, Prefabrication Sector, GRC (Glassfiber Reinforced Cement) Sector Ready-Mixed Concrete Sector, etc.), obtained from raw materials comprising gypsum or phosphogypsum; dross aluminium; soda waste; fly ash and waste bauxite.

### State of the Art

Cement comprises a hydraulic binder material obtained by heating a mixture of natural limestones and clay at elevated temperatures and then grinding this mixture. Since the cement acquires its binding function after reacting with water, it is referred to as hydraulic binder. Cements slowly solidifies in air or in water after it is mixed with water to become a plasticized paste. This hardening reaction is called setting.

Today, there are many types of cement, such as the Portland cement, blast furnace slag cement, calcium aluminate cement and the like. Calcium sulphoaluminate cement (CSA) is one of such types.

The calcium sulphoaluminate cement (CSA) which is a special type of inorganic cement is obtained by reacting a mixture of limestone, bauxite, clay and gypsum stone in a rotary kiln at 1200-1350 °C and sintering. The CSA cements on the market are binder that exhibit early strength and early setting. The calcium sulphoaluminate cements are used with Portland cement to decrease hardening time in applications that require rapid setting and are beneficial in acquiring early strength.

The calcium sulphoaluminate cement (CSA) was first developed in China in 1970 and is currently being also produced in America and Europe. It can be classified as CSA/A and CSA/B depending on the amounts of alite and belite.

The calcium sulphoaluminate cement contributes to acid and sulphate resistance in virtue of the C4A3S% (sulphoaluminate) phase it comprises. Lack of the CSA/B,alite phase and having a predominant belite phase ensures early strength and early setting. These phases also ensure dimensional stability in the product and in the long-term prevents occurrence of volume change.

The burning temperature of grey cement is around 1450 °C. On the other hand, the calcium sulphoaluminate cement reduces the consumption of fossil fuel and NOx creation by thermal and fuelled processes with 1200 °C burning temperature. In addition, the electrical energy necessary to grind the material that has been burnt at low temperatures will also be lower.

The calcium sulphoaluminate cement ensures that the adverse results of the existing Portland cement applications such as contraction, low early strength, low acid resistance, high permeability, high alkalinity, dimensional instability, low sulphate resistance are prevented. With its early strength feature it is suitable for rapid repair applications. In addition it provides a reduction in CO₂ emission up to %40 compared to Portland cement. It reduces NOx emission. Compared to Portland cement, it provides a reduction of 16% in electricity utilization and a reduction of 20-25% in utilization of fossil fuels.

One of the known advancements in the relevant state of the art is given below.

Patent publication No EP1578703B1 relates to "a liquid setting accelerator for compositions comprising Portland cement". The invention discloses a liquid setting accelerator based on calcium aluminate to accelerate the setting of compositions comprising Portland cement. The mentioned setting accelerator is in the form of an aqueous suspension and comprises at least one calcium aluminate; 0.5 to 4% by weight, preferably 0.6 to 2.3% by weight of an aluminous cement setting inhibitor, based on the total weight of the calcium aluminate or the calcium aluminate, and at least one anti-sedimentation agent

### Brief Description of the Invention

The present invention relates to a calcium sulphoaluminate cement which comprises mayenite phase, which satisfies the above mentioned requirements, which eliminates all disadvantages and which bring some additional advantages.

The primary object of the invention is to ensure that the wastes damaging the nature by hazardous storage are used in the production of calcium sulphoaluminate cement.

The invention aims to produce calcium sulphoaluminate cement in a more economical way.

One purpose of the invention is to ensure the utilization of aluminium, bauxite, soda wastes and ash from thermal power plants in calcium sulphoaluminate cement production.

The invention also aims to obtain calcium sulphoaluminate cement comprising Mayenite (C₁₂A₇) phase.

Another purpose of the invention is the utilization of local wastes without damaging the nature.

Another purpose of the invention is to ensure the production of environment-friendly calcium sulphoaluminate cement.

To this end, the invention is calcium sulphoaluminate cement having a dicalcium silicate (C₂S), calcium sulphoaluminate - yeelimite (C₄A₃S), tetracalcium iron aluminate (C₄AF), calcium sulphate (CS) and mayenite (C₁₂A7) mineral phase structure, and comprises:
- gypsum or phosphogypsum;
- dross aluminium which is produced as waste during aluminium production,
- soda waste as pulp obtained in soda production facilities remaining after soda ash is removed as product,
- fly ash obtained from stack gases as a result of the combustion of pulverized coal in thermal power plants,
- waste bauxite obtained in calcium aluminate cement production facilities.

The mineral phase structure of the calcium sulphoaluminate cement of the present invention comprises 15-35% C₂S, 35-70% C₄A₃S, 2-8% C₄AF, 2-8% CS and 0.1-20% C₁₂A₇.

To achieve the objectives of the invention, a method to produce calcium sulphoaluminate cement is provided, which method comprises the following process steps:
- reducing the size of the raw materials comprising gypsum or phosphogypsum; dross aluminium; soda waste; fly ash and waste bauxite by passing through 50 mm sieve and obtaining a homogenous mixture,
- grinding the homogenous mixture thus obtained,
- burning the ground mixture in the kiln at 1200-1300 °C to obtain clinker,
- cooling the obtained clinker,
- mixing the cooled clinker with gypsum and grinding it in the mill.

In order to achieve the purposes of the invention, the mentioned clinker comprises 3% by weight waste bauxite, 10% by weight fly ash, 43% by weight soda waste, %17 by weight dross aluminium, and 27% by weight gypsum or phosphogypsum.

In order to realize the purposes of the invention, 70-97% by weight clinker is mixed with 3-30% by weight gypsum and the mixture is ground.

The structural and characteristic properties of the invention and all its advantages will be understood by the detailed disclosure given below. Thus, it is expected that the assessment is made taking into account this detailed disclosure.

### Detailed Description of the Invention

In this detailed disclosure, the calcium sulphoaluminate cement of the invention comprising mayenite phase and its preferred embodiments are disclosed only for better understanding the subject and without causing any limitations.

The present invention relates to calcium sulphoaluminate cement comprising dross aluminium (Gross alumina) which is produced as waste during aluminium production; soda wastes in the form of pulp which is obtained from soda production facilities and which remains after soda ash is taken as product in soda production; fly ash obtained from stack gases produced by the combustion of pulverised coal in thermal power stations; and waste bauxite obtained in calcium aluminate cement production facilities. Table 1 below gives the ingredients and the ratios of these ingredients in calcium sulphoaluminate cement of the present invention.

**Table 1: Ingredients and their ratios of the calcium sulphoaluminate cement**

| Raw material | Preferred amount by weight (%) | Usable amount by weight (%) |
|---|---|---|
| Waste bauxite | 2.8 | 0.1-50 |
| Fly ash | 8.7 | 0.1-50 |
| Soda waste | 37.4 | 0.1-60 |
| Dross aluminium | 14.8 | 0.1-50 |
| Gypsum or phosphogypsum | 36.3 | 0.1-50 |

In the production of calcium sulphoaluminate cement, soda waste is used instead of limestone. Low burning temperature reduces the waste from soda industry instead of limestone which is the source of calcium oxide in the raw material mixture and the carbon dioxide emission from calcinations and electricity consumption up to 40%.

The CaO from limestone is produced by calcination of the compound CaCO₃ and the CO₂ gas is emitted in this process. The soda waste, in which CaO is present instead of limestone, reduces the cabon dioxide emission in this way. The soda waste, used in the production of calcium sulphoaluminate cement, is consisted of the solid waste from the solvay process in soda production. This solid waste is the pulp remaining after soda ash is taken as the product. In Table 2 below, the results of a chemical analysis on soda waste are given. In this analysis the CaO content of soda waste can be seen.

**Table 2: Results of the chemical analysis of soda waste**

| Content | Amount by weight (%) |
|---|---|
| SiO₂ | 4.53 |
| Al₂O₃ | 2.13 |
| Fe₂O₃ | 0.899 |
| CaO | 47.51 |
| MgO | 3.46 |
| K2O | 0.12 |
| Na₂O | 0.47 |
| SO₃ | 2.98 |
| P₂O₅ | 0.42 |
| TiO₂ | 0.11 |
| Cr₂O₃ | 0.0047 |
| Mn₂O₃ | 0.0246 |
| LOI | 37.32 |
| F.CaO | 0.0 |

The fly ash used in the production of the calcium sulphoaluminate cement is the waste from a thermal power plant. The said fly ash comprises a high amount of SO₃ and is obtained by trapping the particles in the stack gas by electrofilters during the combustion of pulverized coal by itself in the furnaces of the thermal power plant.

The bauxite used in the production of the calcium sulphoaluminate cement are the bauxite wastes that pass through the 50 mm sieve not used in calcium aluminate cement facilities. The said waste comprises bauxite particles smaller than 50 mm particle size not used in the kiln.

The Dross Aluminium used in the production of the calcium sulphoaluminate cement is the waste from aluminium production facilities. The results of the chemical analysis of Dross aluminium (referred to as Gross alumina in the literature) are given below in Table 3.

**Table 3: Results of the chemical analysis of Dross aluminium**

| Contents | Amount by weight (%) |
|---|---|
| SiO₂ | 0.0 |
| Al₂O₃ | 89.0 |
| Fe₂O₃ | 1.10 |
| CaO | 0.0 |
| MgO | 5.2 |
| K2O | 3.2 |
| Na₂O | 0.6 |
| SO₃ | 0.0 |
| P₂O₅ | 0.0 |
| TiO₂ | 0,6 |
| Cr₂O₃ | 0.05 |
| Mn₂O₃ | 0,45 |
| LOI | 0.0 |
| F.CaO | 0.0 |

It is also possible to use phosphogypsum instead of gypsum in the production of calcium sulphoaluminate cement. The gypsum raw material is used both as setting regulator and as additive in the cement mill.

The mineral phase structure of the calcium sulphoaluminate cement of the invention comprises the following phases:
- C₂S: Dicalcium silicate
- C₄A₃S*: Calcium sulphoaluminate - yeelimite
- C₄AF : Tetracalcium iron aluminate
- CS* : Calcium sulphate
- 12 CaO * 7 Al₂O₃ (C₁₂A₇): Mayenite.

These phases comprise an important part of the CSA cement. Different from the calcium sulphoaluminate cements known in the state of the art, the calcium sulphoaluminate cement of the invention comprises a Mayenite phase (0.1-20%).

The compositions of the clinker target phases of the calcium sulphoaluminate cement of the invention are given in Table 4 below:

**Table 4: Mineral phase structure of the calcium sulphoaluminate cement**

| **PHASE** | **%** |
|---|---|
| C₂S | 15-35 |
| C₄A₃S* | 35-70 |
| C₄AF | 2-8 |
| CS* | 2-8 |
| C₁₂A₇ | 0.1-20 |

In the raw material composition to fulfil the Ca, S, Al, Fe, Si elements required for establishing these phases:
- Waste bauxite is used as a source of aluminium and iron,
- Ash from thermal power plant is used as a source of aluminium, sulphur, silica and calcium,
- Soda waste is used as a source of calcium and silica,
- Dross Aluminium is used as a source of aluminium,
- Gypsum is used as a source of sulphur and calcium.

The mayenite phase (Dodecacalcium heptaaluminate (C₁₂A₇)) is a hydraulic phase that provides thermal stability and strength which is not seen in CSA cements. It is the dross aluminium (impurity from raw material) used in the raw material composition that causes the formation of this phase. The mayenite phase rapidly reacts with water. Thus, it contributes to early strength. In addition, since it is a reactive phase, it has early setting property. The start of setting is between 4-8 minutes and end of setting is between 10-16 minutes. As a result of hydration, the C₂AH₈, CAH₁₀ and C₃A(CH)_{0,5}(Cc)_{0,5}H_{11,5} compounds are formed.

In the production of the calcium sulphoaluminate cement of the invention, it is provided using of the wastes damaging the nature by hazardous storage in the process, in virtue of using wastes as raw material. Using aluminium wastes, soda waste and calcium aluminate facility waste adds an environmental dimension to the cement.

The production method for the calcium sulphoaluminate cement of the invention comprises the crushing, grinding, burning and re-grinding processes respectively.

The production method for the calcium sulphoaluminate cement of the invention comprises the following process steps:
- reducing the size of the raw material, comprising gypsum or phosphogypsum; dross aluminium; soda waste; fly ash and waste bauxite, to pass through 50 mm sieve and obtaining a homogenous mixture,
- grinding the homogenous mixture obtained,
- burning the ground mixture in the kiln at 1200-1300 °C temperature and obtaining a clinker,
- cooling the burnt mixture (clinker),
- mixing the cooled mixture (clinker) with gypsum and grinding the mixture in the mill.

Crushing the Raw Material: The raw material mixture comprising gypsum, dross aluminium, soda waste, fly ash and waste bauxite, is reduced in size in crushers so that they can pass through 50 mm sieve. Then, it is made into a homogenous mixture in pre-homogenization systems.

Grinding the Raw Material (80-120 °C, atmospheric pressure): The raw material mixture store in the homogenization section are conveyed to horizontal or vertical raw mills for grinding. Here, the grinding process is carried out at 100-120 tons/hour. Then, the ground material is stored in raw material silos.

Raw Material Burning (1200-1300 °C, negative pressure): The raw material mixture in the raw material silos passes through pre-heaters to the rotary kiln. In the sintering section, the temperature rises up to 1200 °C, which is the burning temperature. Clinkerization occurs at this temperature. The clinker obtained is cooled to be ready for the cement mill. InTable 5 below gives the raw material contents used to obtain clinker and the usage ratios.

**Table 5: Clinker contents and usage ratios**

| Raw material | Preferred amount by weight (%) | Utilizable amount by weight (%) |
|---|---|---|
| Waste bauxite | 3 | 0.1-50 |
| Fly ash | 10 | 0.1-50 |
| Soda waste | 43 | 0.1-60 |
| Dross aluminium | 17 | 0.1-50 |
| Gypsum or phosphogypsum | 27 | 0.1-50 |

Clinker +Gypsum Grinding (80-130 °C, atmospheric pressure): The clinker from the kiln is mixed with gypsum and this mixture is ground in the cement mill. The particle size of the mixture is reduced down to 2500-5000 cm²/g Blaine value and the calcium sulphoaluminate cement obtained is stored in cement silos. In Table 6 below the clinker and gypsum ratios mixed to give the calcium sulphoaluminate cement of the invention.

**Table 6: Content of calcium sulphoaluminate cement and usage ratios**

| Raw material | Utilizable amount by weight (%) |
|---|---|
| Clinker | 70-97 |
| Gypsum | 3-30 |

The resistance of the calcium sulphoaluminate cement of the invention to sea water and corrosive chemicals (Cl, SO₄, Mg, NH₃ salts) ensures advantage in permeations in bridges, in need for impermeable layers, in GRC production and in the manufacture of pipes and precast structures. The point where the present invention differs is in areas where rapid hardening cement is required. The mayenite content provides support in this issue.

## Claims

1. Calcium sulphoaluminate cement having dicalcium silikat (C₂S), calcium sulphoaluminate - yeelimite (C₄A₃S), tetracalcium iron aluminate (C₄AF), calcium sulphate (CS) and mayenite (C₁₂A7) mineral phase structure, **characterized in that** it comprises:
• gypsum or phosphogypsum;
• dross aluminium which is produced as waste during aluminium production,
• soda waste as pulp obtained in soda production facilities remaining after soda ash is removed as product,
• fly ash obtained from stack gases as a result of the combustion of pulverized coal in thermal power plants,
• waste bauxite obtained in calcium aluminate cement production facilities.

2. A cement according to Claim 1, **characterized in that** its mineral phase structure comprises 15-35% C₂S, 35-70% C₄A₃S, 2-8% C₄AF, 2-8% CS and 0,1-20% C₁₂A₇ phases.

3. A method to produce cement according to Claim 1, **characterized in that** it comprises the following process steps:
• reducing the size of the raw materials comprising gypsum or phosphogypsum; dross aluminium; soda waste; fly ash and waste bauxite to pass through 50 mm sieve and obtaining a homogenous mixture,
• grinding the homogenous mixture thus obtained,
• burning the ground mixture in the kiln at 1200-1300 °C and obtaining clinker,
• cooling the obtained clinker,
• mixing the cooled clinker with gypsum and grinding it in the mill.

4. A method according to Claim 3, **characterized in that** it comprises the process step of mixing 70-97% by weight of clinker with 3-30% by weight of gypsum, and grinding the mixture.

5. A method according to Claim 3, **characterized in that** the mentioned clinker comprises 3% by weight waste bauxite, 10% by weight fly ash, 43% by weight soda waste, %17 by weight dross aluminium, and 27% by weight gypsum or phosphogypsum.
